Europäisches Patentamt

European Patent Office

Office européen des brevets

(19)

(11) **EP 0 887 306 B1**

(12) **EUROPÄISCHE PATENTSCHRIFT**

(45) Veröffentlichungstag und Bekanntmachung des Hinweises auf die Patenterteilung:
**02.02.2000 Patentblatt 2000/05**

(51) Int Cl.⁷: **C01B 3/58**

(21) Anmeldenummer: **98110754.3**

(22) Anmeldetag: **12.06.1998**

(54) **Vorrichtung zur Erzeugung eines wasserstoffreichen und kohlenmonoxidarmen Gases**

Apparatus for the production of a gas rich in hydrogen and poor in carbon monoxide

Dispositif pour la production d'un gaz riche en hydrogène et pauvre en monoxyde de carbone

(84) Benannte Vertragsstaaten:
**FR GB IT**

(30) Priorität: **28.06.1997 DE 19727588**

(43) Veröffentlichungstag der Anmeldung:
**30.12.1998 Patentblatt 1998/53**

(73) Patentinhaber: **DBB Fuel Cell Engines GmbH**
**73230 Kirchheim/Teck-Nabern (DE)**

(72) Erfinder:
• **Schüssler, Martin**
**89077 Ulm (DE)**
• **Strobel, Barbara**
**89160 Dornstadt (DE)**

• **zur Megede, Detlef, Dr.**
**89347 Bubesheim (DE)**

(56) Entgegenhaltungen:
**DE-C- 19 544 895**

• **PATENT ABSTRACTS OF JAPAN vol. 015, no. 254 (E-1083), 27. Juni 1991 & JP 03 081969 A (FUJI ELECTRIC CO LTD), 8. April 1991**
• **PATENT ABSTRACTS OF JAPAN vol. 096, no. 009, 30. September 1996 & JP 08 119602 A (AQUEOUS RES:KK), 14. Mai 1996**
• **PATENT ABSTRACTS OF JAPAN vol. 095, no. 002, 31. März 1995 & JP 06 305702 A (MITSUBISHI GAS CHEM CO INC), 1. November 1994**

**Beschreibung**

Die Erfindung betrifft ein Verfahren und eine Vorrichtung zur Erzeugung eines wasserstoffreichen, kohlenmonoxidarmen Gases gemäß dem Oberbegriff des Patentanspruchs 1 beziehungsweise 3.

Eine Vorrichtung zur Wasserstofferzeugung mittels partieller Oxidation und/oder Wasserdampfreformierung von Methanol ist aus der DE 44 23 587 C2 bekannt. Im dabei entstehenden Produktgasstrom ist neben dem Wasserstoff auch Kohlenmonoxid enthalten, daß für bestimmte Anwendungen, beispielsweise bei der Umsetzung des erzeugten Wasserstoffs in einer Brennstoffzelle, unerwünscht ist.

Zur Beseitigung oder zumindest zur Reduzierung des Kohlenmonoxidanteils in dem wasserstoffreichen Gas ist es außerdem bekannt, dieser Gaserzeugungsvorrichtung eine Gasreinigungsstufe nachzuschalten. Eine solche Gasreinigungsstufe ist beispielsweise aus der DE 195 44 895 C1 bekannt, wobei das im wasserstoffreichen Gas enthaltene Kohlenmonoxid unter Zugabe von Sauerstoff an einem Oxidationskatalysator selektiv oxidiert wird.

Beim Starten muß das Gaserzeugungssystems jedoch auf Betriebstemperatur gebracht werden. Dies kann beispielsweise durch Aufheizen von außen oder durch Einleiten von heißen Gasen erfolgen. Aus der JP 58-108291 A ist es beispielsweise bekannt, in einem Reformer einen keramischen Kern mit einer elektrischen Heizvorrichtung vorzusehen. Zur Erzeugung heißer Gase kann beispielsweise eine katalytische Verbrennung an einem Pt-haltigen Katalysator eingesetzt werden. Aus der JP 08119602 A ist beispielsweise ein Gaserzeugungssystem mit einem separaten katalytischen Brenner bekannt. Dort wird ein heißes Gas erzeugt, dessen Energie in einem Verdampfer auf das zu reformierende Gas und somit beim Durchströmen des Reformers auch auf diesen übertragen wird. Nachteilig bei diesen Vorrichtungen ist die Tatsache, daß für die Beheizung insbesondere während der Startphase zusätzliche Komponenten benötigt werden.

Es ist die Aufgabe der Erfindung, eine Vorrichtung und eine Verfahren zur Erzeugung eines wasserstoffreichen, kohlenmonoxidarmen Gases mit verbesserten Kaltstarteigenschaften zu schaffen.

Dieses Problem wird durch ein Verfahren beziehungsweise eine Vorrichtung mit den Merkmalen des Patentanspruchs 1 beziehungsweise 3 gelöst.

Eine ähnliche Vorrichtung und ein ähnliches Verfahren sind auch in der Anmeldung EP 0 887 307, die am gleichen Tag angemeldet wurde.

Im Normalbetrieb eines Gaserzeugungssystems wird die Gasreinigungsstufe erst nach der Gaserzeugungsvorrichtung vom Gas durchströmt. Wird als Gasreinigungsstufe eine Vorrichtung zur selektiven CO-Oxidation eingesetzt, die einen (im allgemeinen platinhaltigen) Katalysator zur Entfernung des Kohlenmonoxid aus dem wasserstoffreichen Gas enthält, so kann diese während der Startphase auf einfache Art und Weise durch eine Umkehrung der Strömungsrichtung vorübergehend als katalytischer Brenner betrieben werden, so daß die Vorrichtung einfach und schnell auf die notwendige Betriebstemperatur gebracht werden kann. Zusätzliche Komponenten sind hierzu abgesehen von entsprechenden Schaltventile nicht notwendig, so daß ein kompaktes System entsteht.

Verwendet man dieses Prinzip der Strömungsumkehr bei einer Gaserzeugungsvorrichtung, in der neben oder anstelle der Wasserdampfreformierung auch die partielle Oxidation durchgeführt wird, so ergibt sich ein weiterer Vorteil. Eine dem Reformierungsbereich auch im Normalbetrieb vorgelagerte platinhaltige Zone würde zwangsläufig zu einer zweistufigen Betriebsweise führen. Der Sauerstoff im Gasstrom würde im Normalbetrieb vollständig in der für die Verbrennung hoch aktiven platinhaltigen Zone verbraucht. Dadurch werden dort große Wärmemengen frei, die in den Reformierungsbereich transportiert werden müssen. Sollte diese zweistufige Funktionsweise nicht erwünscht sein, so darf die platinhaltige Zone nur während der Startphase durchströmt werden, was eine ausschließliche Verwendung dieser Komponente für die Startphase bedeuten würde.

Mit der erfindungsgemäßen Vorrichtung/Verfahren ergibt sich dagegen eine einfache Lösung ohne einen separaten Reaktor oder Reaktorbereich, der nur während der Startphase eingesetzt wird.

Weitere Vorteile und Ausgestaltungen gehen aus den Unteransprüchen und der Beschreibung hervor. Die Erfindung ist nachstehend anhand einer Zeichnung näher beschrieben, wobei

Fig. 1    eine Prinzipdarstellung einer Vorrichtung zur Erzeugung eines wasserstoffreichen, kohlenmonoxidarmen Gases mit den Ventilschaltstellungen während des Normalbetriebs und

Fig. 2    die Vorrichtung aus Fig. 1 mit den Ventilschaltstellungen während der Startphase zeigt.

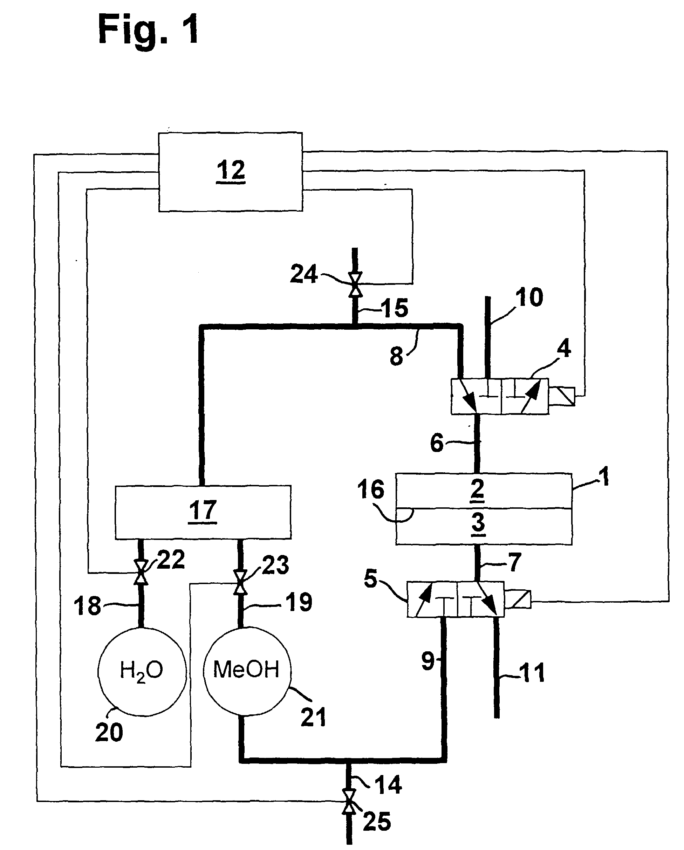

Die in Fig. 1 insgesamt mit 1 gekennzeichnete Vorrichtung zur Erzeugung eines wasserstoffreichen, kohlenmonoxidarmen Gases, im folgenden als Gaserzeugungssystem bezeichnet, besteht aus einer Gaserzeugungsvorrichtung 2 und einer Gasreinigungsstufe 3. Die Gaserzeugungsvorrichtung 2 kann als Reaktor zur katalytischen Wasserdampfreformierung eines Wasserdampf/Brennstoffgemisches, kurz als Reformer bezeichnet, oder als Reaktor zur partiellen Oxidation eines Sauerstoff/Brennstoffgemisches ausgebildet sein. Außerdem ist es auch möglich, den Reaktor zur partiellen Oxidation im Reformer zu integrieren, indem vorzugsweise im Eingangsbereich des Reformers ein geeigneter Oxidationskatalysator angeordnet wird.

Die Gasreinigungsstufe 3 ist als Vorrichtung zur selektiven Kohlenmonoxid-Oxidation - im folgenden als CO-Oxidator bezeichnet - ausgebildet. Im Normalbetrieb wird das Produktgas aus der Gaserzeugungsvorrichtung 2 direkt in die Gasreinigungsstufe 3 geführt. Die Gaserzeugungssystem 1 ist vorzugsweise als Wärmetauscher aufgebaut, wobei zwischen der Gaserzeugungsvorrichtung 2 und der Gasreinigungsstufe 3 eine Wärmeaustauschfläche 16 vorgesehen ist. Als Brennstoff kommen beliebige kohlenwasserstoffhaltige Ausgangsstoffe in Frage, wobei das folgende Ausführungsbeispiel anhand von Methanol als Brennstoff erläutert wird.

Der Gaserzeugungsvorrichtung 2 wird über eine Zuleitung 6 ein gasförmiges Wasserdampf/Methanolgemisch zugeführt. Zur Erzeugung des Wasserdampf/Methanolgemisches ist ein Verdampfer 17 vorgesehen, dem aus entsprechenden Vorratsbehältern 20, 21 Wasser und flüssiges Methanol mit Hilfe nicht dargestellter Förderpumpen über entsprechende Leitungen 18, 19 zugeführt wird. Für die Dosierung der Medien beziehungsweise für die Aktivierung/Deaktivierung der Förderung sind Dosierventile 22, 23 in den Leitungen 18, 19 vorgesehen. Das im Verdampfer 17 erzeugte Wasserdampf/Methanolgemisch wird dann im Normalbetrieb über die Leitung 8 und das Zweiwegeventil 4 in die Leitung 6 eingespeist. Die Verbindung zwischen der Leitung 6 und einer Leitung 10 ist in diesem Schaltzustand des Zweiwegeventils 4 unterbrochen. Ist in der Gaserzeugungsvorrichtung 2 ein Oxidationskatalysator vorgesehen, so wird über eine Sauerstoffzuführleitung 15 mit integriertem Dosierventil 24 eine geeignete Menge an Sauerstoff beziehungsweise Luft zum Wasserdampf/Methanolgemisch zudosiert.

Bei der katalytischen Wasserdampfreformierung von Methanol wird ein Gemisch aus Methanol und Wasserdampf unter Zufuhr von Wärme an einem geeigneten Katalysator zu Wasserstoff umgesetzt, wobei gleichzeitig Kohlendioxid und Kohlenmonoxid entsteht:

$$CH_3OH + H_2O \rightarrow 3\,H_2 + CO_2 \text{ oder } CH_3OH \rightarrow 2\,H_2 + CO$$

Alternativ oder zusätzlich kann Methanol auch unter Zugabe von Sauerstoff durch eine partielle Oxidation zu Kohlendioxid und Wasserstoff umgesetzt werden:

$$CH_3OH + \tfrac{1}{2}\,O_2 \rightarrow 2\,H_2 + CO_2$$

Der CO-Oxidator 3 wird zur Entfernung von Kohlenmonoxid CO aus dem in der Gaserzeugungsvorrichtung 2 erzeugten wasserstoffreichen Gas mittels selektiver Oxidation verwendet. Das Produktgas, bestehend beispielsweise aus Wasserstoff und Kohlendioxid mit einem CO-Anteil von 1-3 Vol%, wird nach entsprechender Reinigung vorzugsweise für den mobilen Einsatz von PEM-Brennstoffzellen in Fahrzeugen verwendet.

Bei der selektiven Oxidation wird dem Produktgas zusätzlich Sauerstoff, beispielsweise in Form von Umgebungsluft, zugeführt, wobei dann das Kohlenmonoxid CO durch den Sauerstoff $O_2$ zu Kohlendioxid $CO_2$ oxidiert wird:

$$CO + \tfrac{1}{2}\,O_2 \rightarrow CO_2$$

Alternativ kann der Sauerstoff jedoch auch an einer oder mehreren Stellen direkt in den CO-Oxidator 3, beispielsweise über eine zusätzliche, im Ausführungsbeispiel jedoch nicht dargestellte Leitung eingebracht werden. Die Reaktion wird an einem geeigneten Oxidationskatalysator, beispielsweise Platin und/oder Ruthenium auf einem geeigneten Träger, wie $Al_2O_3$ oder einem Zeolith in Pulverform, durchgeführt. Nach der Reinigung des Produktgases wird das wasserstoffreiche, kohlenmonoxidarme Gas dann über die Leitung 7, das Zweiwegeventil 5 und die Leitung 11 an einen nicht dargestellten Empfänger, beispielsweise eine Speichervorrichtung oder eine Brennstoffzelle, abgeführt.

Weiterhin ist der Vorratsbehälter 21 für das Methanol über eine weitere Leitung 9 mit dem Zweiwegeventil 5 verbunden. Im Normalbetrieb ist diese Leitung 9 jedoch durch das Zweiwegeventil 5 gesperrt. An der Leitung 9 ist außerdem noch eine zweite Sauerstoffzuführungsleitung 14 mit integriertem Dosierventil 25 vorgesehen. Schließlich ist zur Steuerung der gesamten Vorrichtung ein Steuergerät 12 vorgesehen, daß über Steuerleitungen mit den Ventilen 4, 5, 22-25 verbunden ist.

Während des Normalbetriebs werden die Zweiwegeventile 4,5 durch das Steuergerät 12 in der gezeigten Stellung gehalten. Das Dosierventil 25 ist geschlossen. Die Stellung der Dosierventile 22 bis 24 werden entsprechend einer Lastanforderung eingestellt.

Bei der Wasserdampfreformierung handelt es sich um eine endotherme Reaktion. Das heißt, zur Aufrechterhaltung der Reaktion muß dem Reformer 2 laufend Energie zugeführt werden. Da es sich bei der CO-Oxidation um eine stark exotherme Reaktion handelt, wird der Reformer 2 und der CO-Oxidator 3 vorzugsweise in einem gemeinsamen Gehäuse integriert, so daß die im CO-Oxidator 3 freigesetzte Energie über die Wärmeaustauschfläche 16 auf den Reformer 2 übertragen werden kann. Es ist natürlich auch möglich, den Reformer durch einen im Reformer integrierten Wärmetauscher separat zu beheizen, so daß auch die Integration in einem gemeinsamen Gehäuse entfallen kann.

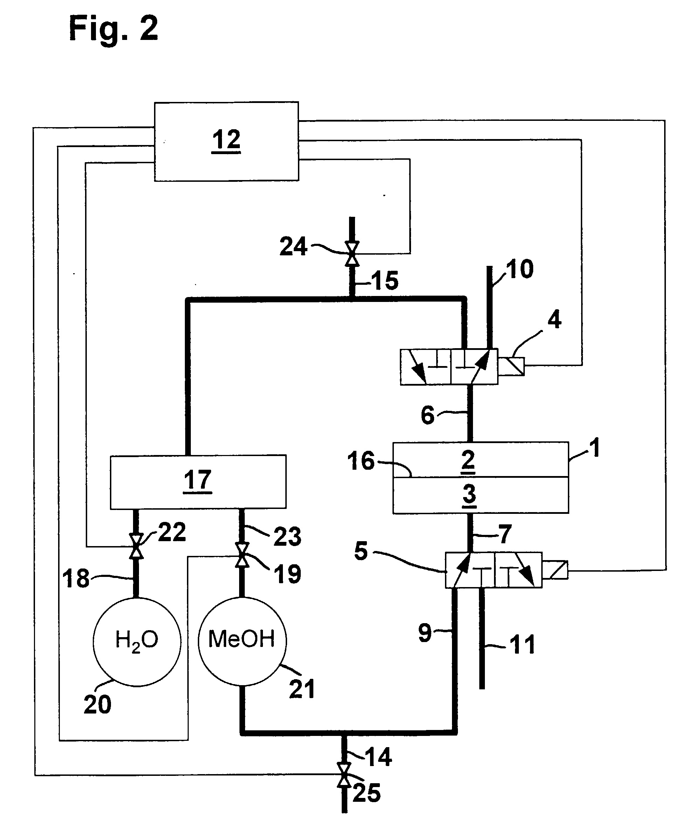

Die gemäß Fig. 1 erläuterte Vorrichtung in der Schaltstellung während der Startphase zeigt Fig. 2, wobei gegenüber Fig. 1 gleiche Teile mit identischen Bezugszeichen gekennzeichnet sind. Beim Start werden die Zweiwegeventile 4, 5 vom Steuergerät 12 in die dargestellten Schaltstellungen gebracht. Gleichzeitig werden die Dosierventile 22 bis 24 geschlossen und das Dosierventil 25 geöffnet. Dadurch wird kein Wasser und Methanol mehr zum Verdampfer 17 beziehungsweise in die Leitung 8 gefördert. Vielmehr wird Methanol und über die Leitung 14 zugeführter Sauerstoff über das Zweiwegeventil 5 und die Leitung 7 in den CO-Oxidator 3 geführt und dort am CO-Oxidationskatalysator oxidiert. Der CO-Oxidator 3 mit dem darin enthaltenen Oxidationskatalysator wird daher vorübergehend als katalytischen Brenner eingesetzt. Durch diese katalytische Oxidation wird Wärmeenergie freigesetzt. Das heiße Gas durchströmt dann anschließend die Gaserzeugungsvorrichtung 2, die dadurch schnell auf Betriebstemperatur gebracht wird. Nach dem Durchströmen der Gaserzeugungsvorrichtung 2 wird das Gas dann über die Leitung 6, das Zweiwegeventil 4 und die Leitung 10 an die Umgebung oder einen nicht dargestellten Katalysator zur Restgasverwertung abgeführt. Durch die vom Steuergerät 12 initiierten Schaltvorgänge wird daher die Durchströmungsrichtung im Gaserzeugungssystem während der Startphase im Vergleich zum Normalbetrieb umgekehrt.

Die Startphase wird beispielsweise nach einer vorgegebenen Zeitdauer oder wenn eine vorgegebene Temperatur in der Vorrichtung 1 erreicht ist beendet. Die Zufuhr des Brennstoff/Sauerstoffgemisches zum CO-Oxidator 3 wird dann mit Hilfe des Steuergerätes 12 durch Ansteuerung der Ventile 4, 5, 22 bis 25 gestoppt. Anschließend wird das Gaserzeugungssystem 1 dann in der bereits oben beschriebenen Art und Weise betrieben.

Neben dem in der Zeichnung dargestellten Anordnung sind weitere Ausgestaltungen möglich. Beispielsweise kann auf die Leitung 9 und die zweite Sauerzuführungsleitung 14 verzichtet werden. Statt dessen kann auch zwischen der Einmündung der Sauerstoffzuführungsleitung 15 und dem Zweiwegeventil 4 eine Bypassleitung von der Leitung 8 abzweigen, welche dann anstelle der Leitung 9 zur Zufuhr eines Methanol/Sauerstoffgemisches während der Startphase mit dem Zweiwegeventil 5 verbunden ist. In diesem Fall kann dann auch während der Startphase Wasser aus dem Vorratsbehälter 20 zudosiert werden.

Weiterhin kann sowohl die Gaserzeugungsvorrichtung 2 als auch die Gasreinigungsstufe 3 mehrstufig ausgeführt sein, wobei in der Startphase dann eine oder mehrere Stufen in der umgekehrten Strömungsrichtung durchströmt werden. Entscheidend ist nur, daß zuerst eine der Stufen des CO-Oxidators 3 durchströmt und daher als katalytischer Brenner eingesetzt wird. Im gezeigten Ausführungsbeispiel wird während der Startphase nicht nur die Reihenfolge der Komponenten 2, 3 vertauscht, sondern auch die Durchströmungsrichtung innerhalb der Komponenten 2, 3 umgekehrt. Es ist jedoch auch möglich, durch geeignete Leitungsführung zwar die Reihenfolge der Komponenten 2, 3 während der Startphase zu vertauschen, die Durchströmungsrichtung innerhalb der Komponenten 2, 3 jedoch beizubehalten.

**Patentansprüche**

1. Verfahren zur Erzeugung eines wasserstoffreichen, kohlenmonoxidarmen Gases, wobei in einer Gaserzeugungsvorrichtung (2) aus einem Wasser/Brennstoffgemisch durch katalytische Wasserdampfreformierung und/oder aus einem Sauerstoff/Brennstoffgemisch durch partielle Oxidation ein Wasserstoff und Kohlenmonoxid enthaltendes Produktgas erzeugt und in einer Gasreinigungsstufe (3) der Kohlenmonoxidanteil im Produktgas durch selektive CO-Oxidation an einem Oxidationskatalysator reduziert wird,
   **dadurch gekennzeichnet,**
   daß während einer Startphase Sauerstoff zum zugeführten Brennstoff beigemischt und die Strömungsrichtung derart umgekehrt wird, daß zuerst die Gasreinigungsstufe (3) und erst anschließend die Gaserzeugungsvorrichtung (2) durchströmt wird.

2. Verfahren nach Anspruch 1,
   **dadurch gekennzeichnet,**
   daß die Gaserzeugungsvorrichtung (2) und die Gasreinigungsstufe (3) während der Startphase jeweils in umgekehrter Richtung durchströmt werden.

3. Verfahren nach Anspruch 1,
   **dadurch gekennzeichnet,**
   daß während der Startphase die Strömungsrichtung in der Gaserzeugungsvorrichtung (2) und/oder der Gasreinigungsstufe (3) erhalten bleibt und lediglich die Reihenfolge der Durchströmung der Komponenten (2, 3) vertauscht ist.

**4.** Vorrichtung (1) zur Erzeugung eines wasserstoffreichen, kohlenmonoxidarmen Gases mit einer Gaserzeugungsvorrichtung (2) zur katalytischen Wasserdampfreformierung eines Wasserdampf/Brennstoffgemisches und/oder zur partiellen Oxidation eines Sauerstoff/Brennstoffgemisches, mit einer Gasreinigungsstufe (3) zur Entfernung von Kohlenmonoxid aus dem Produktgas der Gaserzeugungsvorrichtung (2) mit Hilfe der selektiven CO-Oxidation, und mit Zu- und Abführleitungen (6 bis 11),
**dadurch gekennzeichnet,**
daß in den Zu- und Abführleitungen (6 bis 11) Mittel (4, 5) zur Umkehrung der Strömungsrichtung vorgesehen sind, derart, daß während der Startphase die Gaserzeugungsvorrichtung (2) stromab der Gasreinigungsstufe (3) und nach Beendigung der Startphase die Gasreinigungsstufe (3) stromab der Gaserzeugungsvorrichtung (2) angeordnet ist und daß eine Sauerstoffzuführleitung (14) zur Zugabe von Sauerstoff in die Zuleitung (9) zumindest während der Startphase vorgesehen ist.

**5.** Vorrichtung nach Anspruch 4,
**dadurch gekennzeichnet,**
daß die Gaserzeugungsvorrichtung (2) und die Gasreinigungsstufe (3) jeweils über Leitungen (6, 7) mit einem Zweiwegeventil (4, 5) verbunden sind, daß die Zweiwegeventile (4, 5) jeweils mit einer Leitung (8, 9) zur Zuführung eines Brennmittels und mit einer Leitung (10, 11) zur Abfuhr des Produktgases verbunden sind, und daß eine Steuervorrichtung (12) zur Ansteuerung der Zweiwegeventile (4,5) vorgesehen ist derart, daß während der Startphase die Leitungen 9 und 7 beziehungsweise 6 und 10 und nach Beendigung der Startphase die Leitungen 8 und 6 beziehungsweise 7 und 11 in Strömungsverbindung stehen.

## Revendications

**1.** Procédé de production d'un gaz riche en hydrogène, pauvre en monoxyde de carbone, dans lequel on fabrique un gaz d'un produit contenant de l'hydrogène et du monoxyde de carbone dans un dispositif de production de gaz (2) à partir d'un mélange eau/combustible par reformage catalytique avec de la vapeur d'eau et/ou à partir d'un mélange oxygène/ combustible par oxydation partielle et dans lequel on réduit la partie de monoxyde de carbone dans le gaz de produit dans une étape de purification du gaz (3) par co-oxydation sélective à l'aide d'un catalyseur d'oxydation, caractérisé en ce que, pendant une phase de démarrage, on mélange l'oxygène au combustible amené et on inverse le sens d'écoulement de sorte que l'on passe d'abord à travers l'étape de purification du gaz (3) et seulement ensuite à travers le dispositif de production de gaz (2).

**2.** Procédé selon la revendication 1, caractérisé en ce qu'on passe respectivement à travers le dispositif de production du gaz (2) et l'étape de purification du gaz (3) pendant la phase de démarrage en sens inverse.

**3.** Procédé selon la revendication 1, caractérisé en ce que, pendant la phase de démarrage, le sens d'écoulement dans le dispositif de production du gaz (2) et/ou l'étape de purification du gaz (3) subsiste et qu'uniquement l'ordre du passage inversé des composants (2, 3) est changé.

**4.** Dispositif (1) de production d'un gaz riche en hydrogène, pauvre en monoxyde de carbone avec un dispositif de production de gaz (2) pour le reformage catalytique avec de la vapeur d'eau d'un mélange vapeur d'eau/combustible et/ou pour l'oxydation partielle d'un mélange oxygène/ combustible, avec une étape de purification de gaz (3) pour l'élimination du monoxyde de carbone du gaz de produit du dispositif de production du gaz (2) à l'aide de la co-oxydation sélective, et avec des conduites d'alimentation et de transport (6 à 11), caractérisé en ce que des moyens (4, 5) d'inversion du sens d'écoulement sont prévus dans les conduites d'alimentation et de transport (6 à 11), de sorte que, pendant la phase de démarrage, le dispositif de production du gaz (2) est ordonné en aval de l'étape de purification du gaz (3) et que, une fois la phase de démarrage terminée, l'étape de purification du gaz (3) est ordonné en aval du dispositif de production du gaz (2), et en ce qu'une conduite d'alimentation en oxygène (14) est prévue pour l'addition d'oxygène dans la conduite d'alimentation (9) au moins pendant la phase de démarrage.

**5.** Dispositif selon la revendication 4, caractérisé en ce que le dispositif de production de gaz (2) et l'étape de purification de gaz (3) sont reliés respectivement sur des conduites (6, 7) à des vannes à deux voies (4, 5), en ce que les vannes à deux voies (4, 5) sont reliées respectivement à une conduite (8, 9) pour l'alimentation d'un combustible et à une conduite de transport du gaz du produit (10, 11) pour le transport du gaz de produit, et en ce qu'un dispositif de commande (12) est prévu pour la commande des vannes à deux voies (4, 5) de sorte que, pendant la phase de démarrage, les conduites 9 et 7 respectivement 6 et 10 et, une fois la phase de démarrage terminée, les conduites 8 et 6 respectivement 7 et 11 forment le chemin d'écoulement.

## Claims

1. A method of producing a hydrogen-rich low monoxide gas whereby, in a gas producing apparatus (2) and from a water/fuel mixture, product gas is produced by catalytic water vapour reforming and/or by partial oxidation from an oxygen/fuel mixture, the carbon monoxide fraction in the product gas being reduced in a gas cleansing stage (3) by selective CO-oxidation on an oxidation catalyst, characterised in that during a starting phase, oxygen is admixed with the supplied fuel and the direction of flow is so reversed that it passes first through the gas cleansing stage (3) and only then through the gas producing apparatus (2).

2. A method according to claim 1, characterised in that the flow through the gas producing apparatus (2) and the gas cleansing stage (3) is reversed during the starting phase.

3. A method according to claim 1, characterised in that the direction of flow in the gas producing apparatus (3) and/ or the gas cleansing stage (3) is retained during the starting phase, only the sequence of flow through the components (2, 3) being changed around.

4. An apparatus (1) for producing a hydrogen-rich low monoxide gas with a gas producing apparatus (2) for catalytic water vapour reforming of a water vapour/fuel mixture and/or for partial oxidation of an oxygen/fuel mixture, with a gas cleansing stage (3) for eliminating carbon monoxide from the product gas from the gas producing apparatus (2) by means of selective CO-oxidation and with feed and discharge pipes (6 to 11), characterised in that in the feed and discharge pipes (6 to 11) means 4, 5) of reversing the flow direction are provided so that during the starting phase the gas producing apparatus (2) is disposed downstream of the gas cleansing stage (3) and after completion of the starting phase the gas cleansing stage (3) is disposed downstream of the gas producing apparatus (2) and in that an oxygen supply pipe (14) is provided to add oxygen into the feed pipe (9), at least during the starting phase.

5. An apparatus according to claim 4, characterised in that the gas producing apparatus (2) and the gas cleansing stage (3) are respectively connected by pipes (6, 7) to a two-way valve (4, 5) and in that the two-way valves (4, 5) are each connected to a pipe (8, 9) for feeding a fuel and to a pipe (10, 11) for carrying away the product gas and in that a control device (12) is provided to actuate the two-way valves (4, 5) so that during the starting phase the pipes (9 and 7) or respectively (6 and 10) and, after completion of the starting phase, the pipes (8 and 6) and respectively (7 and 11) are connected for through flow.

# Fig. 1

# Fig. 2